# EUROPÄISCHE PATENTSCHRIFT

(11) **EP 1 496 426 B1**
(45) Veröffentlichungstag und Bekanntmachung des Hinweises auf die Patenterteilung: **08.01.2020**
(21) Anmeldenummer: 04102509.9
(22) Anmeldetag: 04.06.2004
(51) Int. Cl.: G06F 3/0484, G06F 3/0488

(54) **Verfahren zur Eingabe von Parametern eines Parameterfeldes**
Method for the inputting of parameters of a parameter field
Méthode pour entrer des paramètres d'un champ de paramètres

(30) Priorität: 11.07.2003 DE 10331775
(43) Veröffentlichungstag der Anmeldung: 12.01.2005
(73) Patentinhaber: Continental Automotive GmbH, 30165 Hannover (DE)
(72) Erfinder: May, Norbert, 64859 Eppertshausen (DE); Vittoratos, Christos, 63069 Offenbach (DE)

(56) Entgegenhaltungen:
- EP-A- 0 100 640
- EP-A- 0 564 278
- EP-A- 1 457 867
- EP-A2- 1 291 205
- WO-A-02/35304
- WO-A-02/063601

## Beschreibung

Die Erfindung betrifft ein Verfahren zur Eingabe von Parametern eines Parameterfeldes zur Steuerung eines Systems.

Mit zunehmender Komplexität von Vorrichtungen bzw. Systemen, welche eine Steuerung oder Regelung aufweisen, gewinnt in der Regel auch der Informationsfluss zwischen dem Benutzer und der Maschine an Umfang. Die Übermittelung der Information zwischen dem zu steuernden System und dem Benutzer kann hierbei bisweilen zu einem zeitführenden Faktor werden. Zur effizienteren Gestaltung und Erhöhung der Informationsdichte des Austauschs der Information werden daher ständig neue Konzepte für verschiedene Arten der zu übermittelnden Informationen entwickelt.

Eine hohe Informationsdichte beim Informationsfluss an den Benutzer wird häufig mittels einer Anzeige oder eines Bildschirmes erzielt, ohne dass der Benutzer eines aufwendigen Lernprozesses bedarf. Meist sehr viel zeitaufwendiger ist die Übermittelung der Information von dem Benutzer an das zu steuernde System. Hier sind bereits die verschiedensten Eingabevorrichtungen entwickelt worden.

Eine Zusammenfassung des bidirektionalen Informationsflusses in einer Vorrichtung steht in dem Stand der Technik mit einem sensitiven Bildschirm zur Verfügung, wie er zum Beispiel in der Patentschrift DE 44 24 138 C1 beschrieben ist. Derartige Bildschirme haben den Vorteil, dass sowohl Anzeige der Information für den Benutzer als auch Eingabegerät zum Einspeisen der Information in das zu steuernde System platzsparend zusammengefasst sind. Zusätzlichen Vorteil bietet der vorgeschlagene sensitive Flachbildschirm, weil die Konfiguration dieses Eingabegerätes auf die jeweilige Bediensituation benutzergerecht angepasst werden kann, so dass dem Benutzer keine unnötig störenden Bedienelemente ohne echte Bedienoption in der jeweiligen Bediensituation präsentiert werden. Aber auch dieses vorteilhafte Informationsübermittelungsmedium hat seine Schwächen, wenn eine Vielzahl von Informationen, beispielsweise in Form eines Parameterfeldes von dem Benutzer an das System zu übergeben sind. Selbst bei einem verhältnismäßig harmonischen Zusammenhang zwischen den einzelnen Parametern des Parameterfeldes, beispielsweise einer linearen Abhängigkeit des einen Parameters von dem anderen, bleibt es dem Benutzer häufig nicht erspart, dem System jeden einzelnen Parameter mitzuteilen.

Die WO 200206360 A1 beschreibt eine Head-up Anzeige mit einem Eingabesystem, bei dem aus der Stellung eines Fingers vor einer Darstellung eines Bedienmenues auf der Head-up Anzeige eine Bedienfunktion ausgelöst werden kann. Hierbei wird die Stellung des Fingers auf das Bedienmenue projiziert, so dass einzelne Bedienfunktionen ausgewählt werden können. Die EP 1 291 205 A2 beschreibt ein Touchdisplay, auf dem einzelne Bedienelemente dargestellt sind und die eingestellten und dargestellten Werte durch ein Berühren und Verschieben der dargestellten Schieberegler veränderbar sind. Die WO 2002 035304 A2 beschreibt schließlich ein Verfahren zur Eingabe von Parametern eines Parameterfeldes zur Steuerung eines Systems, wobei auf einem sensitiven Bildschirm (1) das Parameterfeld zunächst in einer ersten Belegung mit Parametern mittels Punkten, Linien und/oder Flächen grafisch dargestellt wird, und wobei die Punkte, Linien und/oder Flächen mittels Berührung des Bildschirmes (1) verändert werden, so dass das resultierende dargestellte Parameterfeld eine von der ersten Belegung verschiedene zweite Belegung mit Parametern aufweist, und Parameter des Parameterfeldes mittels mindestens einer Linie auf dem Bildschirm (1) dargestellt sind. Bei der vorgenannten Schrift erfolgt dieses Berühren in der Art, dass die Linie mittels des Fingers berührt wird und dann durch ein Ziehen des Fingers in die gewünschte Richtung verändert wird.

Die Erfindung hat es sich daher zur Aufgabe gemacht, die Eingabe ergonomisch zu verbessern.

Die Erfindung sieht zur Lösung der Aufgabe ein Verfahren mit den Merkmalen des Patentanspruchs 1 vor.

Die ergonomischen Vorteile gewinnt das erfindungsgemäße Verfahren dadurch, dass die Parameter des Parameterfeldes mittels mindestens einer Linie auf dem Bildschirm dargestellt sind und eine Annäherung eines auf Grund einer Berührung definierten Berührungsbereiches auf dem Bildschirm ein Verschieben in Abstandsrichtung von dem Berührungsbereich bewirkt. Auf diese Weise ist der Benutzer nicht auf Mutmaßungen angewiesen, wo sich denn die zu verändernde Linie, gegebenenfalls unter dem Berührungsbereich seines undurchsichtigen Fingers, befindet, sondern kann direkt die Veränderung optisch nachvollziehen. Weitere Präzision wird in der Bedienung dadurch erzielt, dass die Linie stets einen definierten Mindestabstand zu dem Berührungsbereich aufweist.

Ein großer Vorteil des erfindungsgemäßen Verfahrens liegt in der gewaltigen Informationsdichte, so dass die komplexe Information eines vollständigen Parameterfeldes gleichsam mittels eines Handstreichs an das System von dem Benutzer übermittelt werden kann.

Eine vorteilhafte Weiterbildung der Erfindung sieht vor, dass die grafische Darstellung des Parameterfeldes in einer ersten Belegung einen Ist-Zustand des Systems und die grafische Darstellung des Parameterfeldes in einer zweiten Belegung einen Soll-Zustand des Systems anzeigt. Auf diese Weise erfährt der Benutzer sogleich zu Beginn der Eingabe den aktuellen Zustand und kann diese Information in seiner Entscheidung für einen neuen Soll-Zustand mit einfließen lassen. Hierbei bleibt es dem Benutzer außerdem erspart, über die auf Grund seines Eingriffs auftretenden Steuer- oder Regeldifferenzen zu mutmaßen, und er kann sein Wissen über den aktuellen Zustand des Systems direkt überprüfen.

Besonders vorteilhafte Anwendung findet das erfindungsgemäße Verfahren, wenn das Parameterfeld zweidimensional ist. Auch ein dreidimensionales Parameterfeld kann mit Vorteil Gegenstand der Eingabe von Parametern sein, insbesondere, wenn die Anzeige des sensitiven Bildschirmes grafisch dreidimensional angesteuert wird. Damit ein Benutzer bei verschiedenen Zugriffen auf das System in zeitlichen Abständen nicht ständig einen bereits schon mal vorgegebenen Soll-Zustand eingeben muss, ist es zweckmäßig, wenn verschiedene alte Soll-Zustände in einem Speicher abrufbar abgelegt sind. Dadurch wird es ebenfalls möglich, die erste Belegung des Parameterfeldes, welche vor einem Eingriff des Benutzers auf den sensitiven Bildschirm dargestellt wird, mit einem alten Soll-Zustand vorzubelegen, so dass der Benutzer direkt diesen Soll-Zustand übernehmen kann oder an dem alten Soll-Zustand in einem bestimmten Bereich noch Änderungen nach seinen Wünschen vornehmen kann.

Eine besonders präzise Vorstellung von der Regeldifferenz des zu steuernden Systems, bekommt der Benutzer, wenn beim Verschieben, Verändern, Vergrößern oder Verkleinern der grafischen Darstellung des Parameterfeldes die erste Belegung des Parameterfeldes zusätzlich zu der zweiten, veränderten Belegung des Parameterfeldes auf dem Bildschirm unterscheidbar dargestellt wird. Auf diese Weise kann der Benutzer die dynamische Entwicklung des Systems aus seiner Erfahrung schon bei seiner Eingabe abschätzen. Ein Höchstmaß an Präzision der Vermittlung des transienten Verlaufs des Systems an den Benutzer bekommt dieser, wenn in bestimmten zeitlichen Abständen zwischen der Darstellung vor der Eingabe des Parameterfeldes mit einer ersten Belegung in Form des Ist-Zustandes des Systems und den grafischen Elementen der Darstellung, welche in Folge der Eingabe den Soll-Zustand des Systems widerspiegeln, in bestimmten zeitlichen Abständen die aufeinander folgenden Ist-Zustände mittels grafischer Elemente dargestellt werden. Werden hierzu beispielsweise Linien oder Flächen verwendet, ist die Darstellung analog zu verstehen, wie beispielsweise Jahreslinien eines Baumes oder Rastlinien eines Schwingungsbruches, welche ebenfalls den zeitlichen oder qualitativen Verlauf einer Entwicklung widerspiegeln. Hierzu ist es notwendig, dass die Darstellung der ersten Belegung permanent aktualisiert wird, so dass stets der Ist-Zustand abgelesen werden kann.

In ähnlicher Weise können Parameter, welche mittels einer Fläche auf dem Bildschirm dargestellt sind, verändert werden, indem eine erste Fläche auf dem Bildschirm dadurch vergrößerbar ist, dass die Fläche berührt wird und der Berührungsbereich auf dem Bildschirm verschoben wird, in der Weise, dass der im Laufe der Verschiebung auf Grund einer Berührung definierte Berührungsbereich zu der ersten Fläche addiert wird. Die initiale Berührung der Fläche dient der Identifikation des zu verändernden Objektes auf dem Bildschirm, und anschließend kann die Fläche durch Verschieben des Berührungsbereiches, beispielsweise des Berührungsbereiches eines Fingers auf dem sensitiven Bildschirm, um den Betrag des mittels Berührung neu erschlossenen Bereiches auf dem Bildschirm vergrößert werden. Auf diese Weise können dem System binäre, eindimensionale, zweidimensionale und sogar dreidimensionale Parameterfelder übermittelt werden.

Eine hervorragende optische Differenzierung von zu verändernden, veränderten oder dazwischenliegenden Begrenzungskonturen von Flächen wird erhalten, wenn die einzelnen Flächen eine Begrenzungskontur aufweisen, welche als Linie farblich hervorgehoben ist. Aus ergonomischen Gründen empfiehlt es sich, wenn die erste Fläche eine Begrenzungskontur aufweist, welche stets einen definierten Mindestabstand zu dem Berührungsbereich aufweist. Auf diese Weise bewegt sich die Begrenzungskontur nicht unter den Berührungsbereich, so dass der Benutzer stets die Begrenzungskontur optisch wahrnehmen kann.

Besonders vorteilhafte Anwendung findet das erfindungsgemäße Verfahren, wenn das System eine Musikanlage ist, insbesondere ein Autoradio, und das Parameterfeld eine örtliche Verteilung der Lautstärke. Gleichsam denkbar ist das System als eine Klimaanlage, insbesondere in einem Auto, wobei das Parameterfeld eine örtliche Verteilung der Temperatur darstellt.

Im Folgenden ist die Erfindung unter Bezugnahme auf Zeichnungen anhand von Ausführungsbeispielen zum Zwecke der Verdeutlichung näher beschrieben. Es zeigen:
- Figuren 1 und 2: eine schematische Darstellung des Verschiebens einer Flächenbegrenzungslinie zur Eingabe eines Parameterfeldes an das zu steuernde System an einem sensitiven Bildschirm,
- Figuren 3 und 4: jeweils eine Detaildarstellung der Darstellung des sensitiven Bildschirmes der Figur 1 bzw. 2,
- Figuren 5 bis 8: jeweils eine Darstellung der Anzeige eines sensitiven Bildschirmes während unterschiedlicher Eingabevorgänge.

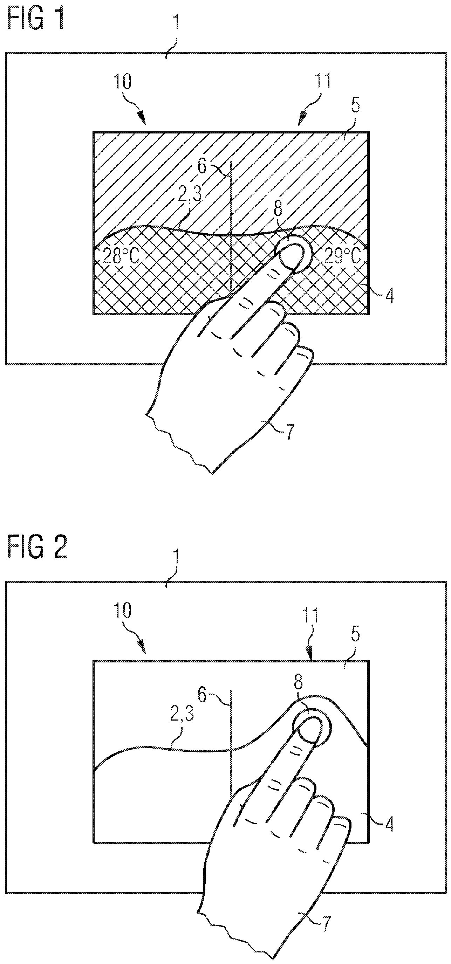

Die Figur 1 zeigt einen sensitiven Bildschirm 1 zur Eingabe eines Parameterfeldes nach dem erfindungsgemäßen Verfahren. Das Parameterfeld ist mittels eines grafischen Elementes 2, nämlich einer Linie 3, auf der Anzeige des Bildschirmes 1 dargestellt, wobei im Wesentlichen eine erste dunkel dargestellte Fläche 4 von einer zweiten etwas heller dargestellten Fläche 5 mittels der Linie 3 abgegrenzt ist. Konkret handelt es sich hierbei um die Anzeige des Temperaturverlaufes von der Fahrerseite zu der Beifahrerseite, wobei eine vertikale Grenzlinie 6 die Position der Mittelkonsole symbolisiert. Wie in Figur 2 dargestellt, kann die Linie 3 mittels Berührung, hier durch eine Hand 7, und anschließendem Verschieben der Berührungsfläche 8 in der Weise verändert werden, dass die Linie 3 in einem bestimmten Abstand von der Berührungsfläche 8 vor dem berührenden Finger der Hand 7 verschoben wird. Die Linie 3 gibt hierbei den Soll-Temperaturverlauf in dem Kraftfahrzeug wieder, und die erste Fläche 4, bzw. die Begrenzungskontur 9 zu der zweiten Fläche 5 den aktuellen Ist-Zustand.

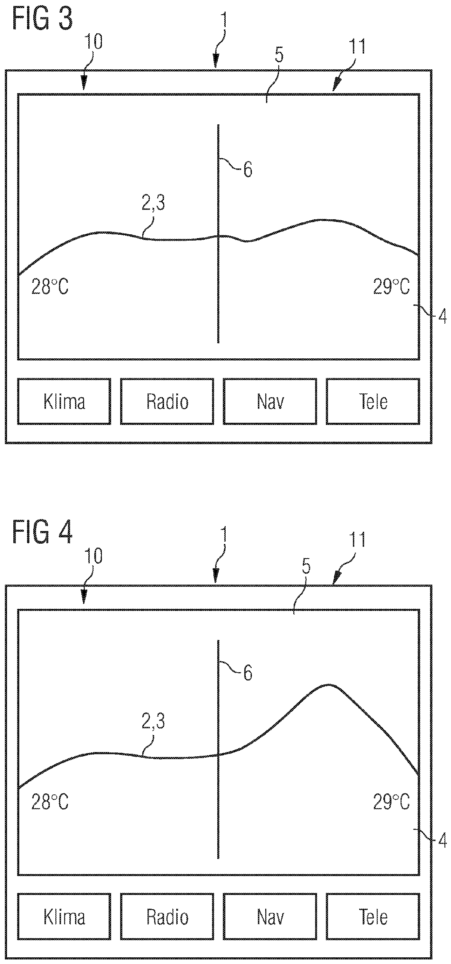

Die Detaildarstellungen der Figuren 3 und 4 zeigen, dass ursprünglich der Ist-Zustand, symbolisiert durch die erste Fläche 4, im Wesentlichen dem Soll-Zustand, symbolisiert durch die Linie 3, entsprach und nach der Modifikation auf der Beifahrerseite eine Regeldifferenz in der Temperatur auftritt, angezeigt mittels der Fläche zwischen der Linie 3 und der Begrenzungskontur 9 auf der Beifahrerseite.

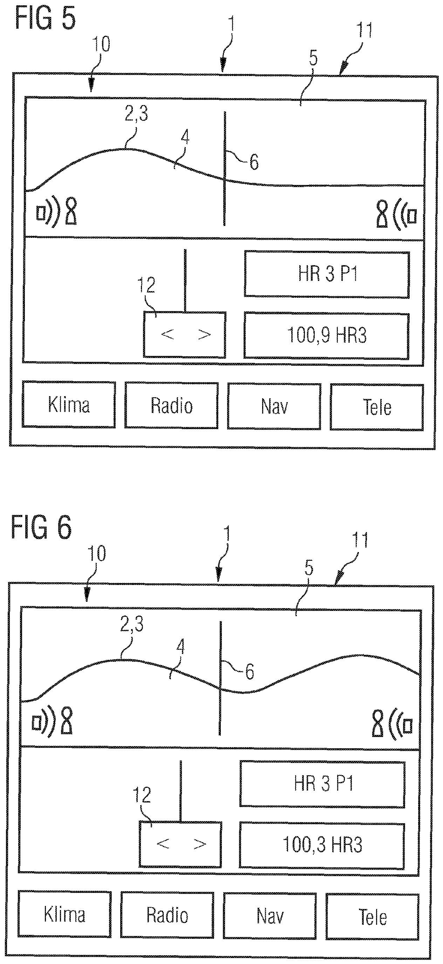

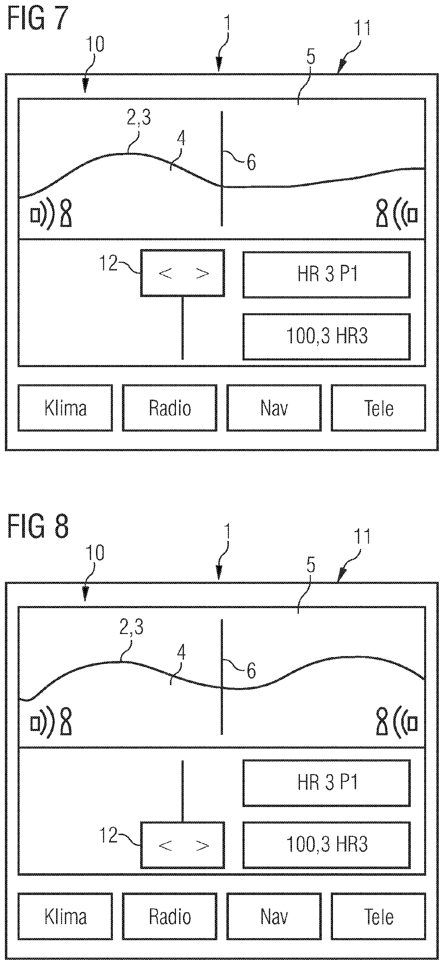

In ähnlicher Weise, wie zuvor beschrieben, findet das erfindungsgemäße Verfahren auf eine Lautstärkesteuerung einer Musikanlage in einem Kraftfahrzeug Anwendung, wie in den Figuren 5 und 6 dargestellt. Der ursprüngliche Verlauf der Linie 3 wurde mittels händischem Eingriffs auf der Beifahrerseite 10 verändert. Auf der Fahrerseite 11 fand keine Veränderung statt. herkömmliche Schieberegler 12 finden ebenfalls vorteilhafte funktionale Integration, wie in den Figuren 7 und 8 dargestellt, wo mittels des Schiebeschalters 12 der Sendersuchlauf eines Autoradios von gespeicherten Sendern auf ungespeicherte Sender umgeschaltet wird.

Die mit den Ausführungsbeispielen beschriebene Anordnung ist lediglich beispielhaft, der Fachmann erkennt unter der beschriebenen Erfindung zahlreiche weitere Ausführungsmöglichkeiten.

## Patentansprüche

1. Verfahren zur Eingabe von Parametern eines Parameterfeldes zur Steuerung eines Systems, wobei
- auf einem sensitiven Bildschirm (1) das Parameter- feld zunächst in einer ersten Belegung mit Parametern mittels Punkten, Linien und/oder Flächen grafisch dargestellt wird, und wobei
- die Punkte, Linien und/oder Flächen mittels Berührung des Bildschirmes (1) verändert werden, so dass das resultierende dargestellte Parameterfeld eine von der ersten Belegung verschiedene zweite Belegung mit Parametern aufweist, und
- Parameter des Parameterfeldes mittels mindestens einer Linie auf dem Bildschirm (1) dargestellt sind **dadurch gekennzeichnet, dass** eine Annäherung eines auf Grund einer Berührung definierten Berührungsbereiches (8) auf dem Bildschirm (1) ein Verschieben der Linie in Abstandsrichtung von dem Berührungsbereich (8) bewirkt, so dass die Linie (3) stets einen definierten Mindestabstand zu dem Berührungsbereich (8) aufweist.

2. Verfahren nach mindestens einem der vorhergehenden Ansprüche, **dadurch gekennzeichnet, dass** die grafische Darstellung des Parameterfeldes in einer ersten Belegung einen Ist-Zustand des Systems und die grafische Darstellung des Parameterfeldes in einer zweiten Belegung einen Soll-Zustand des Systems anzeigt.

3. Verfahren nach mindestens einem der vorhergehenden Ansprüche, **dadurch gekennzeichnet, dass** die grafische Darstellung des Parameterfeldes in einer ersten Belegung einen früher eingegebenen Soll-Zustand des Systems und die grafische Darstellung des Parameterfeldes in einer zweiten Belegung einen Soll-Zustand des Systems anzeigt.

4. Verfahren nach mindestens einem der vorhergehenden Ansprüche, **dadurch gekennzeichnet, dass** das Parameterfeld zweidimensional ist.

5. Verfahren nach mindestens einem der vorhergehenden Ansprüche, **dadurch gekennzeichnet, dass** das Parameterfeld dreidimensional ist.

6. Verfahren nach mindestens einem der vorhergehenden Ansprüche, **dadurch gekennzeichnet, dass** beim Verschieben die erste Belegung des Parameterfeldes zusätzlich zu der zweiten Belegung des Parameterfeldes auf dem Bildschirm (1) unterscheidbar dargestellt wird.

7. Verfahren nach Anspruch 2 und 6, **dadurch gekennzeichnet, dass** die die Darstellung des Parameterfeldes in der ersten Belegung permanent aktualisiert wird.

8. Verfahren nach mindestens einem der vorhergehenden Ansprüche, **dadurch gekennzeichnet, dass** Parameter des Parameterfeldes mittels mindestens einer ersten Fläche (4) auf dem Bildschirm (1) dargestellt sind und die erste Fläche (4) auf dem Bildschirm (1) vergrößerbar ist, indem die Fläche (4) berührt wird und der Berührungsbereich auf (8) dem Bildschirm (1) verschoben wird, in der Weise, dass der im Laufe der Verschiebung auf Grund einer Berührung definierte Berührungsbereich (8) zu der ersten Fläche (4) addiert wird.

9. Verfahren nach Anspruch 8, **dadurch gekennzeichnet, dass** die erste Fläche (4) eine Begrenzungskontur (9) aufweist, welche stets einen definierten Mindestabstand zu dem Berührungsbereich (8) aufweist.

10. Verfahren nach Anspruch 8 oder 9, **dadurch gekennzeichnet, dass** die erste Fläche (4) eine Begrenzungskontur (9) aufweist, welche als Linie (3) farblich hervorgehoben ist.

11. Verfahren nach mindestens einem der vorhergehenden Ansprüche, **dadurch gekennzeichnet, dass** das System eine Musikanlage, insbesondere ein Autoradio ist und das Parameterfeld eine örtliche Verteilung der Lautstärke.

12. Verfahren nach mindestens einem der vorhergehenden Ansprüche, **dadurch gekennzeichnet, dass** das System eine Klimaanlage, insbesondere in einem Auto ist und das Parameterfeld eine örtliche Verteilung der Temperatur.

## Claims

1. Method for inputting parameters of a parameter field for controlling a system, wherein
- the parameter field is first of all graphically represented in a first occupancy with parameters on a sensitive screen (1) by means of dots, lines and/or areas, and wherein
- the points, lines and/or areas are changed by touching the screen (1), with the result that the resulting parameter field represented has a second occupancy with parameters which differs from the first occupancy, and
- parameters of the parameter field are represented by means of at least one line on the screen (1), **characterized in that**, when a touch region (8) which is defined on account of touching on the screen (1) is approached, this causes the line to be shifted in the distance direction from the touch region (8), such that the line (3) is always at a defined minimum distance from the touch region (8).

2. Method according to the preceding claim, **characterized in that** the graphical representation of the parameter field in a first occupancy indicates an actual state of the system and the graphical representation of the parameter field in a second occupancy indicates a desired state of the system.

3. Method according to at least one of the preceding claims, **characterized in that** the graphical representation of the parameter field in a first occupancy indicates a desired state of the system which was input earlier and the graphical representation of the parameter field in a second occupancy indicates a desired state of the system.

4. Method according to at least one of the preceding claims, **characterized in that** the parameter field is two-dimensional.

5. Method according to at least one of the preceding claims, **characterized in that** the parameter field is three-dimensional.

6. Method according to at least one of the preceding claims, **characterized in that**, during the shifting, the first occupancy of the parameter field is represented in a distinguishable manner on the screen (1) in addition to the second occupancy of the parameter field.

7. Method according to Claims 2 and 6, **characterized in that** the representation of the parameter field in the first occupancy is permanently updated.

8. Method according to at least one of the preceding claims, **characterized in that** parameters of the parameter field are represented on the screen (1) by means of at least one first area (4) and the first area (4) on the screen (1) can be enlarged by touching the area (4) and shifting the touch region (8) on the screen (1) in such a manner that the touch region (8) defined on account of touching during the shifting is added to the first area (4).

9. Method according to Claim 8, **characterized in that** the first area (4) has a boundary contour (9) which is always at a defined minimum distance from the touch region (8).

10. Method according to Claim 8 or 9, **characterized in that** the first area (4) has a boundary contour (9) which is highlighted in colour as a line (3).

11. Method according to at least one of the preceding claims, **characterized in that** the system is a music system, in particular a car radio, and the parameter field is a local distribution of the volume.

12. Method according to at least one of the preceding claims, **characterized in that** the system is an air-conditioning system, in particular in a car, and the parameter field is a local distribution of the temperature.

## Revendications

1. Procédé pour entrer des paramètres d'un champ de paramètres afin de commander un système, dans lequel
- le champ de paramètres est d'abord représenté graphiquement sur un écran tactile (l) selon une première affectation avec des paramètres au moyen de points, de lignes et/ou de surfaces, et dans lequel
- les points, les lignes et/ou les surfaces sont modifiés en touchant l'écran (1), de manière à ce que le champ de paramètres représenté qui en résulte présente une seconde affectation de paramètres différente de la première affectation, et
- des paramètres du champ de paramètres sont représentés sur l'écran (1) au moyen d'au moins une ligne,
**caractérisé en ce qu'**un rapprochement d'une région de contact (8) définie sur la base d'un contact sur l'écran (1) provoque un déplacement de la ligne dans la direction d'un espacement par rapport à la zone de contact (8), de manière à ce que la ligne (3) présente toujours une distance minimale définie par rapport à la zone de contact (8).

2. Procédé selon au moins l'une des revendications précédentes, **caractérisé en ce que** la représentation graphique du champ de paramètres selon une première affectation indique un état réel du système et **en ce que** la représentation graphique du champ de paramètres selon une seconde affectation indique un état nominal du système.

3. Procédé selon au moins l'une des revendications précédentes, **caractérisé en ce que** la représentation graphique du champ de paramètres selon une première affectation indique un état nominal préalablement entré du système et **en ce que** la représentation graphique du champ de paramètres selon une seconde affectation indique un état nominal du système.

4. Procédé selon au moins l'une des revendications précédentes, **caractérisé en ce que** le champ de paramètres est bidimensionnel.

5. Procédé selon au moins l'une des revendications précédentes, **caractérisé en ce que** le champ de paramètres est tridimensionnel.

6. Procédé selon au moins l'une des revendications précédentes, **caractérisé en ce que**, lors du déplacement, la première affectation du champ de paramètres est représentée de manière distincte sur l'écran (l) en plus de la seconde affectation du champ de paramètres.

7. Procédé selon les revendications 2 et 6, **caractérisé en ce que** la représentation du champ de paramètres selon la première affectation est actualisée en permanence.

8. Procédé selon au moins l'une des revendications précédentes, **caractérisé en ce que** des paramètres du champ de paramètres sont représentés sur l'écran (1) au moyen d'au moins une première surface (4) et **en ce que** la première surface (4) peut être agrandie sur l'écran (1) en touchant la surface (4) et en décalant la zone de contact sur (8) l'écran (1) de manière à ce que la surface de contact (8) définie au cours du déplacement sur la base d'un contact soit ajoutée à la première surface (4).

9. Procédé selon la revendication 8, **caractérisé en ce que** la première surface (1) présente un contour de délimitation (9) qui présente toujours une distance minimale définie par rapport à la zone de contact (8).

10. Procédé selon la revendication 8 ou 9, **caractérisé en ce que** la première surface (4) présente un contour de délimitation (9) qui est mis en évidence en couleur sous la forme d'une ligne (3) .

11. Procédé selon au moins l'une des revendications précédentes, **caractérisé en ce que** le système est un équipement musical, en particulier un autoradio et **en ce que** le champ de paramètres est une répartition spatiale du volume.

12. Procédé selon au moins l'une des revendications précédentes, **caractérisé en ce que** le système est un équipement de climatisation, en particulier dans une auto et **en ce que** le champ de paramètres est une répartition spatiale de la température.
